# EUROPEAN PATENT APPLICATION

(11) **EP 4 414 397 A1**
(43) Date of publication of application: **14.08.2024**
(21) Application number: 24155962.4
(22) Date of filing: 06.02.2024
(51) Int. Cl.: C08G 18/16, C08G 18/18, C08G 18/24, C08G 18/48, C08G 18/76, C08K 3/04, C08K 9/10

(54) **FLAME RETARDANT ADDITIVE FOR POLYMERIC COMPOSITIONS AND POLYMERIC COMPOSITION COMPRISING SAID ADDITIVE**

(30) Priority: 09.02.2023 IT 202300002196
(71) Applicant: Chimicafine S.r.l., 20098 San Giuliano Milanese (MI) (IT)
(72) Inventor: SCOTTI, Antonio, 20098 SAN GIULIANO MILANESE (MI) (IT)
(74) Representative: Studio Torta S.p.A.

(57) **Abstract**

The present invention describes a flame retardant additive comprising a graphite in granular form, coated with at least one polymer resin. The invention further describes a polymeric composition, comprising said flame retardant additive, and thus provided with good flame retardant and mechanical properties.

## Description

### CROSS-REFERENCE TO RELATED APPLICATIONS

This patent application claims priority of Italian patent application no. 102023000002196 filed on February 9, 2023 the content of which is incorporated herein by reference.

### TECHNICAL SECTOR

The present invention concerns a flame retardant additive for polymeric compositions and a polymeric composition comprising said flame retardant additive. In particular, the polymeric composition is based on thermosetting or thermoplastic organic polymers and/or copolymers. In particular, the polymeric composition is based on foamed, expanded and non-expanded polymers and/or copolymers such as, for example, both ether matrix and ester matrix polyurethanes in all its chemical structures.

### STATE OF THE PRIOR ART

It is known that most of the polymeric materials tend to burn when they are in the presence of a flame. For example, polyurethanes, in particular if they are expanded, degrade in the presence of a fire, developing more or less toxic fumes in addition to promoting flame propagation.

Given the increasing use of the expanded polymers as insulations and sound insulators, both as coatings and as structural elements in the industrial and civil constructions and in the vehicle and boat structures, for these and other applications, such as for example mattresses, sofas, shoe soles, car interiors and industrial vehicle and aircraft interiors, the need is felt for the expanded material to be provided with good flame retardant properties.

Generally, in order to obtain properties of fire and/or combustion propagation resistance, the polymeric mixture is added with suitable flame retardant additives that impart or improve the fire resistance of the polymer itself.

There are several types of flame retardant additives, among which the phosphorus-based fire retardants, e.g. red phosphorus, can be included. Typical phosphorus-containing compounds, suitable for use as flame retardant additives, may be for example: salts of the phosphorous or phosphoric acid, organic esters or polyesters of the phosphoric acid and phosphites.

However, these compounds can alter the physical-mechanical properties of the polymer, imparting the finished material less rigidity, flexibility, resilience and compressive strength, etc. Therefore, the need to add reduced amounts of such phosphorous compounds to safeguard the mechanical properties, consequently limits their ability to impart the desired flame retardant effect to the base polymer.

In addition to the phosphorus compounds alone, mixtures of phosphorus and nitrogen compounds can also be used as flame retardant additives for polymer compounds. Such nitrogen compounds may be inorganic salts such as ammonium salts, or organic compounds and relative organic salts such as, for example, guanidine, melamine and their derivatives, for example, cyanided melamine.

However, the use of such mixtures, in addition to the problems already highlighted for the use of the phosphorus compounds, has further drawbacks linked to the toxicity of the decomposition products of the nitrogen compounds. Therefore, also the nitrogen-based compounds can be added only in a limited amount, which reduces their fire retardant capability.

Another group of additives capable of exerting a flame retardant effect are the fire retardants based on expandable graphite. Expandable graphite, in fact, when added to a polymeric mixture, reduces its flammability and forms a protective intumescent layer without releasing toxic gases. Specifically, said protective intumescent layer is actually a layer of incombustible swollen carbonaceous material that is interposed as a barrier between the flame and the polymer, with the result that the combustion is interrupted.

However, even the expandable graphite as a flame retardant additive is not without drawbacks, such as a black colouring of the mixture, an uneven distribution thereof in the mixture and a worsening of the physical-mechanical properties of the final polymer.

### SUMMARY OF THE INVENTION

It is therefore an aim of the present invention to provide a flame retardant additive that overcomes the drawbacks highlighted herein of the prior art.

In particular, it is an aim of the invention to provide a flame retardant additive that satisfies the need to impart high and constant flame retardant properties to a polymeric composition to which it is added, while maintaining the mechanical properties of the polymeric composition itself within acceptable limits for the use of the final product.

It is also within the aims of the present invention to provide a flame retardant additive at a reasonable cost and which is environmentally sustainable.

In accordance with these aims, the present invention relates to a flame retardant additive as claimed in claim 1 and dependent thereon, to a polymeric composition as claimed in claim 8 and those dependent thereon, as well as to a use of said flame retardant additive in a polymeric composition as claimed in claim 14.

### DESCRIPTION OF THE INVENTION

Further features and advantages of the present invention will become apparent from the detailed description given below.

The flame retardant additive of the present invention comprises graphite in granular form coated and/or encapsulated by at least one polymer resin. In other words, the present additive comprises graphite grains individually coated and/or encapsulated by at least one polymer resin. The present additive is therefore itself also in granular form and is used, i.e. added to a polymeric composition to which it imparts flame retardant properties in granular form. Each granule of the flame retardant additive of the invention comprises a graphite grain coated and/or encapsulated by a polymer resin coating.

Surprisingly, the present additive is particularly advantageous in that the negative aspects found in the known additives based on graphite only are waived due to the fact that the graphite is coated and/or encapsulated by at least one polymer resin, while maintaining the positive aspects of the graphite-based flame retardant additives such as non-toxicity and a high and constant flame retardant effect.

Notoriously, in fact, the graphite-based flame retardant additive has impurities, for example, graphite oxide residues such as to make the additive acidic.

This acidity of the flame retardant additive adversely interferes with the polymerization process, affecting the mechanical properties of the obtained polymer to such an extent as to preclude its use as a finished material.

Thanks, however, to the coating and/or encapsulation with at least one polymer resin, the graphite, included in the flame retardant additive of the present invention, does not interfere with the polyaddition kinetics, i.e. the polymerization takes place without reactive type interferences. Therefore, the present flame retardant additive imparts the desired flame retardant properties without altering the physical-mechanical properties of the polymer thus obtained.

A further advantage of the flame retardant additive of the invention over the prior art is represented by the fact that the coated and/or encapsulated graphite does not release its intrinsic black colouring to the polymeric composition to which it is added.

Furthermore, advantageously, the presence of coated and/or encapsulated graphite favours the adhesion between the flame retardant additive and the monomers that make up the polymeric mixture, thus making the present additive uniformly and homogeneously distributed in the final polymer, thus imparting to the polymer an excellent fire resistance. In fact, unlike the prior art, wherein the graphite, in granular form, is dispersed as such in the polymeric mass, the present invention instead provides for the use of graphite grains individually coated and/or encapsulated by a polymeric coating to form indeed additive granules which are then added to the polymeric mixture making the final polymer uniformly and homogeneously flame resistant.

The graphite included in the flame retardant additive of the invention is in granules, preferably of size ranging from 20 mesh and 200 mesh (i.e. from 841 µm and 74 µm).

Preferably, the graphite, without the coating, has a pH ranging from 3 and 7, more preferably the pH is 6.

The graphite included in this additive is of natural or synthetic origin. In the case of synthetic graphite, this is obtained according to known methods.

As anticipated, the graphite, included in the present flame retardant additive, is coated and/or encapsulated by at least one polymer resin selected from the group consisting of epoxy resins, acrylic resins, polyurethane resins, siloxane resins and their combinations.

Preferably, the graphite is coated and/or encapsulated by an epoxy resin, for example, Bisphenol A or F resin, or by aliphatic type resin, and hardener: mixtures of amines such as for example IPDA, DETA, TETA, AEP, both aliphatic and cycloaliphatic polyamines, as well as adducts, polymercaptans and polyurethane amines, and imidazoline polyamines.

The flame retardant additive of the invention is obtained by mixing the graphite in granules with the polymer resin, which is preferably in liquid form, for example with a high dry content or as an aqueous emulsion. In detail, the polymer resin interacts with the graphite through intermolecular forces of the van der Waals type.

Preferably, the polymer resin coating and/or encapsulation has a thickness ranging from 0.1 µm and 50 µm.

Preferably, the amount of polymer resin relative to graphite is ranging from 40 and 100 pbw per 1000 pbw of graphite, where pbw means "Part By Weight".

Optionally, the present flame retardant additive comprises other agents for reducing fumes, for example, magnesium hydroxide, aluminium hydroxide and zinc derivatives in the amount ranging from 1 to 30% by weight relative to the additive.

In a second aspect, the present invention refers to a polymeric composition comprising the flame retardant additive in granular form like the one described above with reference to the first aspect of the present invention.

The polymeric composition is based on thermosetting or thermoplastic organic polymers and/or copolymers. More in particular, the polymeric composition is based on foamed or expanded polymers and/or copolymers. Preferably, the polymeric composition is based on one or more polyurethanes.

The desired non-flammability characteristics are imparted to the polymeric composition by adding a predetermined amount of the flame retardant additive according to the invention, which is added to the polymeric composition in the form of granules.

By the term "predetermined amount", it is intended to mean an amount of said flame retardant additive capable of imparting the desired flame retardant properties to the polymeric composition, and such as to maintain the mechanical properties of the polymeric composition within acceptable values. Therefore, both the total amount of flame retardant additive relative to the base polymer, and the amount ratios among the components of the additive, such as graphite and polymer resin, can be suitably varied without jeopardising the non-flammability and mechanical strength characteristics of the final polymeric composition.

For example, the amount of flame retardant additive according to the invention, necessary to make the polymeric composition fire retardant, may vary between 5 pbw and 50 pbw relative to the weight of the polymer.

It should however be noted that one of the advantages of the additive according to the invention consists in the fact that it can be used in high amounts, thus imparting high degrees of flame retardant properties to the polymeric composition, without diminishing the mechanical and aesthetic properties (e.g. colouring) of the polymeric composition.

The method of applying the flame retardant additive to the polymeric composition is of traditional type. For example, the composition according to the present invention may be produced by mixing the polymer components, the flame retardant additive and, optionally, other compounds in a batch or continuous mixer.

In the case wherein, for example, the polymeric composition is based on one or more substances for the production of the both expanded and non-expanded urethane polymer, the flame retardant additive of the invention can be added both in the isocyanate and/or prepolymer and in the bicomponent before the mixing between the isocyanic phase and the polyol phase (defined bi-component). The flame retardant additive is thus mixed under stirring with the other components envisaged for the production of the urethane polymer. It is recommended for greater efficiency to add the flame retardant additive in the polyol phase- both ether and ester- both by the mixing/stirring method and in the continuous phase with suitable mixers. In fact, unlike known flame retardant additives, the additive in accordance with the invention does not alter the polymerization reaction, as, for example, it is not complex with the reaction catalysts.

Optionally, the flame retardant additive of the invention can be fed as such or it can be mixed with suitable co-formulates such as, for example, diluents, surfactants, fillers and/or a second flame retardant additive that can act synergistically with the additive of the invention.

In a third aspect, the present invention refers to the use of the additive according to the invention in granular form as flame retardant for a polymeric composition based on thermosetting or thermoplastic organic polymers and/or copolymers, preferably a polymeric composition based on one or more polyurethanes.

"Flame retardant" means an additive that, when introduced into a polymeric composition, improves its fire resistance.

Indeed, although the flame retardant additive according to the invention can be used to impart fire-retardant properties to a wide variety of polymeric compositions, as detailed above, its use is particularly advantageous for polyurethane-based polymeric compositions.

### EXAMPLES

Some embodiments of the flame retardant additive according to the invention and of polymeric compositions comprising said additives are described below.

Table 1 below reports the components, included in the flame retardant additive according to the invention, and the relative percentages expressed in pbw relative to the total weight of the additive.

**Table 1**

| COMPONENTS | pbw |
|---|---|
| Graphite | 1000 |
| Epoxy resin | 40-100 |

Said flame retardant additive has been added in an amount ranging from 5 and 50 pbw in the polyol for the production of ether matrix flexible expanded polyurethane, where pbw means "Parts By Weight".

By way of example, three compositions have been prepared for the production of ether matrix flexible polyurethane foams and comprising the flame retardant additive according to the invention, whose components and the corresponding amounts expressed in pbw are indicated in Table 2, 3 and 4.

**Table 2: composition 1**

| COMPONENTS | pbw |
|---|---|
| Conventional polyol (n.OH: 48) | 100 |
| Water | 4-4.50 |
| Catalysis | 0.15 - 0.25 |
| Blend: CF CAT 33 LV (P) and CF CAT 23 77 | |
| CF CAT SN O2 | 0.22 - 0.25 |
| CF SIL FLEX 10-80 | 1 - 1.10 |
| Flame retardant according to the invention | 20 |
| CF FR 850 (B) | 5 |
| TDI 80/20 isocyanate | 56 |
| stoichiometric index: 110 | |

The flexible polyurethane foam of composition 1 thus produced has a density of about 22 - 24 Kg/m³.

**Table 3: composition 2**

| COMPONENTS | pbw |
|---|---|
| Conventional polyol (n.OH: 48) | 100 |
| Water | 3.15 |
| Catalysis | 0.10 - 0.15 |
| Blend: CF CAT 33 LV (P) and CF CAT 23 77 | |
| CF CAT SN O2 | 0.20 - 0.30 |
| CF SIL FLEX 10-80 | 0.25 - 0.40 |
| Flame retardant according to the invention | 5-15 |
| CF FR 850 (B) | 5 |
| TDI 80/20 isocyanate | 38 |
| stoichiometric index: 110 | |

The flexible polyurethane foam of composition 2 thus produced has a density greater than 30 Kg/m³.

**Table 4: composition 3**

| COMPONENTS | pbw |
|---|---|
| Reactive polyol (n.OH: 28) | 60 |
| Reactive polyol (n.OH:28) | 40 |
| Water | 3.30 - 3.45 |
| Catalysis | 0.10 - 0.15 |
| Blend: CF CAT 33 LV (P) and CF CAT 23 77 | |
| CF CAT SN O2 | 0.10 - 0.25 |
| CF SIL FLEX 10-80 | 1 - 1.10 |
| Flame retardant according to the invention | 15 |
| CF FR 850 (B) | 10 |
| TDI 80/20 isocyanate | 41.65 |
| stoichiometric index: 110 | |

The flexible high resilience polyurethane foam of composition 3 thus produced has a density of about 30 Kg/m³.

The ether matrix flexible polyurethane foams thus prepared were then printed in small boxes to obtain corresponding samples 1, 2 and 3. These samples were thus subjected to different flammability tests such as for example FMVSS302, CAL 117, BS5852. The results show that the foam samples 1, 2 and 3, containing the flame retardant additive in accordance with the invention, have better chemical-physical mechanical characteristics than the ether matrix flexible polyurethane foams containing the same amount of flame retardant such as, for example, trichloropropyl phosphate (TCCP) and melamine.

In addition, the samples 1, 2 and, above all, 3 have a high fire resistance and low smoke development, passing the tests currently in force.

It has thus been found that the invention solves the task and purposes set out above, as the flame retardant additive according to the invention is found to impart high and constant flame retardant properties, not to degrade over time, be uniformly distributed and dispersed in the polymeric composition and not to be toxic.

## Claims

1. A flame retardant additive comprising graphite in granular form, wherein the graphite granules are coated and/or encapsulated by at least one polymer resin; and wherein the polymer resin coating and/or encapsulation has a thickness ranging from 0.1 µm to 50 pm.

2. The flame retardant additive as claimed in claim 1, wherein the graphite is in granules of size ranging from 20 mesh and 200 mesh.

3. The flame retardant additive as claimed in claim 1 or 2, wherein the graphite has a pH ranging from 3 and 7, preferably is 6.

4. The flame retardant additive as claimed in one of the previous claims, wherein the graphite is of natural or synthetic origin.

5. The flame retardant additive as claimed in one of the previous claims, wherein the polymer resin is selected from the group consisting of epoxy resins, acrylic resins, polyurethane resins, siloxane resins and their combinations.

6. The flame retardant additive as claimed in claim 5, wherein the polymer resin is an epoxy resin, preferably resulting from the polyaddition between a bisphenol A matrix resin and a cycloaliphatic polyamine.

7. The flame retardant additive as claimed in one of the previous claims, wherein the amount of polymer resin relative to graphite is ranging from 40 and 100 pbw per 1000 pbw of graphite.

8. A polymeric composition comprising a flame retardant additive as claimed in any one of the previous claims.

9. The polymeric composition as claimed in claim 8, wherein the polymeric composition is based on thermosetting or thermoplastic organic polymers and/or copolymers.

10. The polymeric composition as claimed in claim 9, wherein the polymeric composition is based on foamed or expanded polymers and/or copolymers, preferably it is based on one or more polyurethanes.

11. The polymeric composition as claimed in one of the claims from 8 to 10, wherein the flame retardant additive is in a predetermined amount.

12. The polymeric composition as claimed in claim 11, wherein the flame retardant additive is in the amount ranging from 5 and 50 pbw relative to the weight of the polymer.

13. The polymeric composition as claimed in one of the claims from 8 to 12, wherein the polymeric composition further comprises co-formulates selected from the group consisting of diluents, surfactants, fillers, a second flame retardant additive and their mixtures.

14. Use of a flame retardant additive as claimed in one of the claims from 1 to 7 to impart flame retardant properties to a polymeric composition based on thermosetting or thermoplastic organic polymers and/or copolymers, preferably based on one or more polyurethanes.
